(19)

Europäisches
Patentamt
European
Patent Office
Office européen
des brevets

(11) **EP 2 383 680 A1**

(12) **EUROPEAN PATENT APPLICATION**

(43) Date of publication:
**02.11.2011 Bulletin 2011/44**

(51) Int Cl.:
**G06K 9/46** *(2006.01)*

(21) Application number: **10161514.4**

(22) Date of filing: **29.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **DRALLE A/S**
**2970 Hørsholm (DK)**

(72) Inventors:
 • **Tarp-Johansen, Mads Jeppe**
  **2820, Gentofte (DK)**
 • **Dahl, Anders Bjorholm**
  **2860, Søborg (DK)**

(74) Representative: **Plougmann & Vingtoft A/S**
  **Sundkrogsgade 9**
  **P.O. Box 831**
  **2100 Copenhagen Ø (DK)**

(54) **Classification of objects in harvesting applications**

(57)   The present invention provides a system and a method for providing a model for classifying an object, a system and a method for computing a set of descriptors for an image of an object, and a system and a method for classifying an object. The model for classifying the object comprises a method for computing a descriptor, a vocabulary, a dimension-reducing function, a plurality of sets of normalized frequencies labeled to classify a plurality of like objects.

FIG. 1

```
Providing a plurality of images of like objects          ── 101
                          ↓
Assigning a classification label to each image so        ── 102
as to classify each object
                          ↓
Dividing each image into a plurality of sub-             ── 103
images
                          ↓
Computing, for each sub-image, a descriptor              ── 104
representing the sub-image
                          ↓
Reducing a dimension of a space of descriptors           ── 105
to obtain a space of descriptors of a reduced
dimension
                          ↓
Selecting a cluster centre for each cluster              ── 106
                          ↓
Generating a vocabulary containing a plurality of        ── 107
words representing the totality of selected cluster
centres
                          ↓
Assigning each descriptor in the dimension-              ── 108
reduced space of descriptors to a nearest word in
the vocabulary
                          ↓
Determining for each image a frequency of each           ── 109
word in the vocabulary
                          ↓
Normalizing the frequencies determined for each          ── 110
image to obtain a set of normalized frequencies for
the plurality of images
                          ↓
Assigning for each image the label of the image to       ── 111
the set of normalized frequencies of the image
```

**Description**

FIELD OF THE INVENTION

Generally, the present invention lies within the field of computer vision, in particular within the field of image characterization and classification for industrial applications such as wood harvesting. Specifically, the invention provides a system and a method for providing a model for classifying an object, a system and a method for computing a set of descriptors for an image of an object, and a system and a method for classifying an object.

BACKGROUND OF THE INVENTION

There is an increasing demand for sustainable timber production methods. The environmental issues regarding forest management were made a public concern in the 1980's especially in relation to deforestation of tropical rainforests and illegal logging of tropical hardwoods. It is important to improve the quality of timber harvesting. Today, computer vision can provide a solution for improving the harvesting system. Machines equipped with the computer vision can act and react to the surrounding environment on the basis of visual input and classify images taken of the surrounding environment. Computer vision-based classification applied to harvesting would improve significantly the efficiency and quality of the harvesting. However, the problem of computer vision-based classification for industrial applications in general is to obtain high precision and high speed. Furthermore, the characteristics of digital images make computer vision non-trivial because small changes of visual appearance can dramatically change the pixel representation. This is especially difficult in outdoor conditions susceptible to large changes in object appearance due to change in light, viewing angle, scale, and also physical change of the scene elements.
Hence, an improved harvesting system assisted with computer vision-based classification would be advantageous, and in particular a system more efficient and robust in highly variable conditions would be advantageous.

OBJECT OF THE INVENTION

In particular, it may be seen as an object of the present invention to provide a system for computer vision-based classification in industrial applications, such as harvesting wood, which solves the above mentioned problems.

SUMMARY OF THE INVENTION

Thus, the above described object and several other objects are intended to be obtained in a first aspect of the invention by providing a method for providing a model for classifying an object, the method comprising:

    a. Providing a plurality of images of like objects;
    b. Assigning a classification label to each image so as to classify each object;
    c. Dividing each image into a plurality of sub-images;
    d. Computing, for each sub-image, a descriptor representing the sub-image;
    e. Reducing a dimension of a space of descriptors to obtain a space of descriptors of a reduced dimension;

Wherein a plurality of descriptors of the dimension-reduced space of descriptors forms a plurality of clusters; and

    f. Selecting a cluster centre for each cluster;
    g. Generating a vocabulary containing a plurality of words representing the totality of selected cluster centres;
    h. Assigning each descriptor in the dimension-reduced space of descriptors to a nearest word in the vocabulary;
    i. Determining for each image a frequency of each word in the vocabulary;
    j. Normalizing the frequencies determined for each image to obtain a set of normalized frequencies for the plurality of images;
    k. Assigning for each image the label of the image to the set of normalized frequencies of the image.

The invention is particularly, but not exclusively, advantageous for obtaining an efficient harvesting system, with image classification robust in varying conditions.
In a second aspect, the invention relates to a method for computing a set of descriptors for an image of an object, the method comprising:

    a. Providing the image of the object;
    b. Dividing the image into a plurality of sub-images;

c. Computing for each sub-image a value characterizing a feature of the sub-image in a plurality of colour spaces;

d. Collecting each value of each sub-image to constitute the set of descriptors that corresponds to the image.

In a third aspect, the invention relates to a method for classifying a candidate object, the method comprising:

a. Providing a candidate image of the candidate object;

b. Providing a model for classifying an object, the model comprising a method for computing a descriptor, a vocabulary, a dimension-reducing function, a plurality of sets of normalized frequencies labelled to classify a plurality of like objects;

c. Dividing the candidate image into a plurality of candidate sub-images;

d. Applying the method for computing a descriptor to each candidate sub-image to compute a descriptor representing the candidate sub-image;

e. Applying the dimension-reducing function on a space of descriptors containing the totality of the descriptors, to reduce a dimension of the space of descriptors to a reduced dimension;

f. Assigning each descriptor in the dimension-reduced space of descriptor to a nearest word in the vocabulary of the model;

g. Determining in the candidate image a frequency of each word of the vocabulary;

h. Normalizing the determined frequencies to obtain a set of normalized frequencies for the candidate image;

i. Computing a residual error between the set of normalized frequencies of the candidate image and each set of normalized frequencies in the plurality of sets of normalized frequencies of the model;

j. Determining the set of normalized frequencies of the model that is the nearest to the set of normalized frequencies of the candidate image based on a minimum residual error;

k. Classifying the candidate object as the object labelling the set of normalized frequencies determined.

In a fourth aspect, the invention relates to a system for providing a model for classifying an object according to the first aspect of the invention.

In a fifth aspect, the invention relates to a system for computing a set of descriptors for an image of an object according to the second aspect of the invention.

In a sixth aspect, the invention relates to a system for classifying a candidate object according to the third aspect of the invention.

In a seventh aspect, the invention relates to a computer program product being adapted to enable a computer vision system comprising at least one computer having data storage means in connection therewith to control an apparatus according to the first aspect of the invention.

In an eighth aspect, the invention relates to a computer program product being adapted to enable a computer system comprising at least one computer having data storage means in connection therewith to control an apparatus according to the second aspect of the invention.

In a ninth aspect, the invention relates to a computer program product being adapted to enable a computer system comprising at least one computer having data storage means in connection therewith to control an apparatus according to the third aspect of the invention.

This aspect of the invention is particularly, but not exclusively, advantageous in that the present invention may be accomplished by a computer program product enabling a computer system to carry out the operations of the methods of the first, second or third aspect of the invention when down- or uploaded into the computer system. Such a computer program product may be provided on any kind of computer readable medium, or through a network.

The individual aspects of the present invention may each be combined with any of the other aspects. These and other aspects of the invention will be apparent from the following description with reference to the described embodiments.

BRIEF DESCRIPTION OF THE FIGURES

The system, method, apparatus and computer program according to the invention will now be described in more detail with regard to the accompanying figures. The figures show one way of implementing the present invention and is not to be construed as being limiting to other possible embodiments falling within the scope of the attached claim set.

Figure 1 shows a flowchart illustrating an exemplary implementation of the present invention for providing a model for classifying an object.

Figure 2 shows a flowchart illustrating an exemplary implementation of the present invention for computing a set of descriptors for an image of an object.

Figure 3 shows a flowchart illustrating an exemplary implementation of the present invention for classifying a candidate object.

DETAILED DESCRIPTION OF AN EMBODIMENT

In accordance with the invention there is provided a system and a method for providing a model for classifying an object, a system and a method for computing a set of descriptors for an image of an object, and a system and a method for providing for classifying an object.

As used herein the term "object" refers to any physical object. An object can be a tree, a plurality of trees, wood, a log, a branch, a leaf, a rot, a disease, a knot, a fruit, a plant, a cell, a living organism, an organ or any combination thereof. An object can also be a growing condition of a organism, for example the use of different types of fertilizers on plants, flowers, fruits, trees, or any other living organism.

As used herein the term "image" refers to an artefact. An image can be a two-dimensional or three-dimensional picture, a still image, a moving image, or a video. An image can be recorded on a material object, such as paper or textile by photography or digital processes. An image can also be digital. Depending on whether or not the image resolution is fixed, it may be of vector or raster type. Raster images have a finite set of digital values, called picture elements or pixels. The digital image contains a fixed number of rows and columns of pixels. Pixels are the smallest individual element in an image, holding quantized values that represent the brightness of a given colour at any specific point. Typically, the pixels are stored in computer memory as a raster image or raster map, a two-dimensional array of small integers. These values are often transmitted or stored in a compressed form. Raster images can be created by a variety of input devices and techniques, such as digital cameras, scanners, coordinate-measuring machines, seismographic profiling, airborne radar, and more. They can also be synthesized from arbitrary non-image data, such as mathematical functions or three-dimensional geometric models; the latter being a major sub-area of computer graphics. The field of digital image processing is the study of algorithms for their transformation. Each pixel of a raster image is typically associated to a specific 'position' in some 2D region, and has a value consisting of one or more quantities (samples) related to that position. Digital images can be classified according to the number and nature of those samples: binary, greyscale, colour, false-colour, multi-spectral, thematic, picture function. The term digital image is also applied to data associated to points scattered over a three-dimensional region, such as produced by tomographic equipment. In that case, each datum is called a voxel.

A first aspect of the invention is a method for providing a model for classifying an object comprising the following:

    a. Providing a plurality of images of like objects;
    b. Assigning a classification label to each image so as to classify each object;
    c. Dividing each image into a plurality of sub-images;
    d. Computing, for each sub-image, a descriptor representing the sub-image;
    e. Reducing a dimension of a space of descriptors to obtain a space of descriptors of a reduced dimension;

Wherein a plurality of descriptors of the dimension-reduced space of descriptors forms a plurality of clusters; and

    f. Selecting a cluster centre for each cluster;
    g. Generating a vocabulary containing a plurality of words representing the totality of selected cluster centres;
    h. Assigning each descriptor in the dimension-reduced space of descriptors to a nearest word in the vocabulary;
    i. Determining for each image a frequency of each word in the vocabulary;
    j. Normalizing the frequencies determined for each image to obtain a set of normalized frequencies for the plurality of images;
    k. Assigning for each image the label of the image to the set of normalized frequencies of the image.

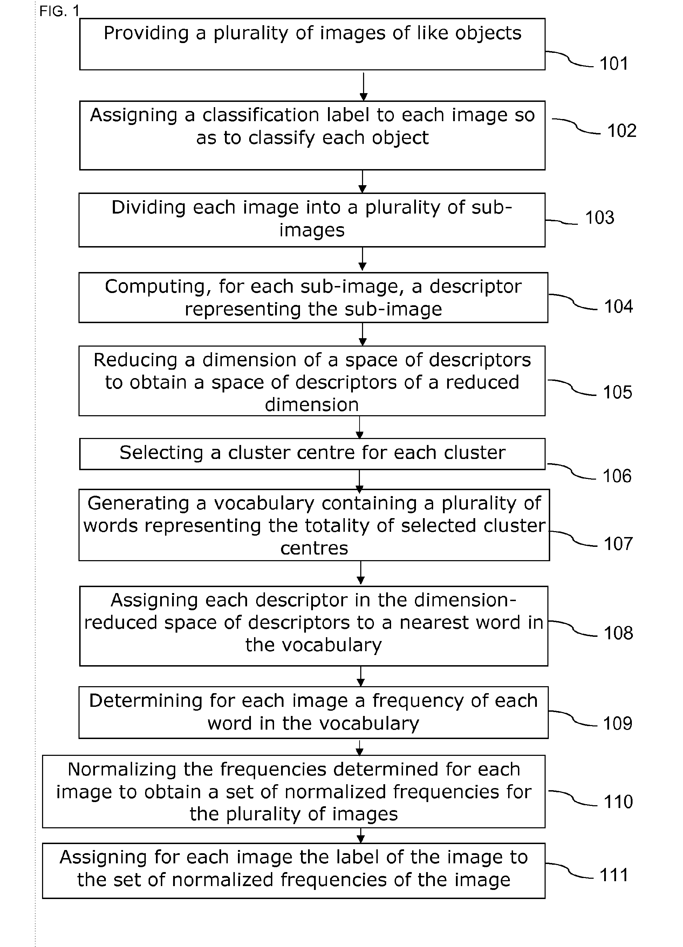

Figure 1 shows a flowchart illustrating an exemplary implementation of the present invention for providing a model for classifying an object. At step 101, a plurality of images of like objects is provided. At step 102, a classification label is assigned to each image so as to classify each object. At step 103, each image is divided into a plurality of sub-images. The number of sub-images may or may not be the same in each image. At step 104, for each sub-image, a descriptor representing the sub-image is computed. Step 105 consists reducing a dimension of a space of descriptors to obtain a space of descriptors of reduced dimension. The plurality of descriptors of the dimension-reduced space of descriptors forms a plurality of clusters. Step 106 consists in selecting a cluster centre for each cluster. Step 107 consists in generating a vocabulary containing a plurality of words representing the totality of selected cluster centres. In the vocabulary, each cluster centre selected is a word of the vocabulary. Step 108 consists in assigning each descriptor in the dimension-reduced space of descriptors to a nearest word in the vocabulary. Step 109 consists in determining for each image a frequency of each word in the vocabulary. In step 110, the frequencies determined are normalized for each image to obtain a set of normalized frequencies for the plurality of images. More precisely, the normalized frequencies make up the empirical probability of each word *w* in the vocabulary *V*, such that $\sum_{w \in V} p(w) = 1$ and $p(w) = \dfrac{n_{Riw}}{n_{Ri}}$ where $n_{Riw}$ is the number of sub-images assigned to *w* and $n_{Ri}$ is number of sub-images.

In step 111, for each image the label of the image is assigned to the set of normalized frequencies of the image.

The establishment of the model for classifying an object can also be seen the training of a model with images. Images to be provided to the model could thus also be termed training images or images of a training set (or dataset). The methodology to provide a model for classifying an object can be based on a machine learning approach where a model for wood classification from images is trained from a training dataset. The training dataset consists of images of wood and true values of the wood characteristics to classify for. The model used can also be called the bag-of-words model and species and rot are demonstrated as specific wood characteristic to predict for. Having trained the model, the model can be applied to candidate image of wood in order to classify the wood (and/or determine species or rot).

According to the invention, reducing a dimension of the space of descriptors containing the totality of descriptors to obtain a space of descriptors of a reduced dimension can be performed by one or more of the following: a. a dimension reducing map parameterised with an empirical mean and a projection matrix;

b. a principal component analysis.

According to the invention, selecting a cluster centre for each cluster can be performed by any of the following: a leader-follower algorithm, a k-means algorithm, a quality threshold clustering method and any combination thereof.

The selection of a cluster centre may require first defining clusters, and then selecting cluster centres. For K-means, the implementation could be as follows:

1. Choose the number of clusters, k.
2. Randomly generate k clusters and determine the cluster centers, or directly generate k random points as cluster centers.
3. Assign each point to the nearest cluster centre.
4. Recompute the new cluster centers.
5. Repeat the two previous steps until some convergence criterion is met (usually that the assignment hasn't changed).

For quality threshold clustering, the implementation could be as follows:

1. The user chooses a maximum diameter for clusters.
2. Build a candidate cluster for each point by including the closest point, the next closest, and so on, until the diameter of the cluster surpasses the threshold.
3. Save the candidate cluster with the most points as the first true cluster, and remove all points in the cluster from further consideration.
4. Recurse with the reduced set of points.

In an embodiment, the model for classifying an object is an adaption of the bag-of-words model for text to images. The bag-of-words model is based on the simplifying assumption that a text can be considered an unordered collection of words. The analogy then is that an image can be represented by an unordered collection of canonical descriptors. The tricky part then is to construct the canonical descriptors. The canonical descriptors is the analogy of the vocabulary of texts and thus is called the visual vocabulary. The model for classifying an object could be implemented according to the following:

1- Decide what object is to be classified using the model: rot, wood, logs, trees, diseases, and so on. Let us assume that a tree is to be classified
2- Provide a plurality of images presenting like objects, such as a variety of species of trees. Let *N* be the total number of training images.
3- Subdivide each image into a number of sub-images.
4- For each sub-image compute a descriptor which mathematically is a real valued vector. Thus we can write the descriptors for training image *i* as $\{d_1^i, d_2^i, \ldots, d_{n_{Ri}}^i\}$ with $n_{Ri}$ the number of sub-images and $d_j^i \in R^m$ for some

$m \in$ N.

5- An initial principal component analysis (PCA) is applied to reduce the descriptor dimensionality $m$. In more detail, from the descriptors across all $N$ training images

$$D = \{d_1^1, d_2^1, \ldots, d_{n_{R1}}^1, d_1^2, d_2^2, \ldots, d_{n_{R2}}^2, \ldots, d_1^N, d_2^N, \ldots, d_{n_{RN}}^N\} \subset R^m \quad : \quad :$$

    a- obtain the PCA based dimension reducing mapping function, $f_{dim}$, and
    b- reduce the dimension of the descriptors D followed by a normalisation into $\tilde{D} \subset R^{\tilde{m}}$.

The dimension reducing mapping function $f_{dim}$ is parameterised by the empirical mean of D and a projection matrix according to the PCA.

6-Pick an element at random, $\tilde{d}_0 \in \tilde{D}$ say, and initialise the vocabulary $V$ with this descriptor as the first word $w_1$, i.e. $V = \{w_1\} = \{\tilde{d}_0\}$.

7- For a suitable threshold value of $\beta$: for all $\tilde{d} \in \tilde{D}\backslash$

$$\text{do } w_j \leftarrow argmin_{w_{j'} \in V} |w_{j'} - \tilde{d}|$$

$$\text{if } |w_j - \tilde{d}| < \beta, \text{ then } w_j \leftarrow \frac{n_j}{n_j+1} w_j + \frac{1}{n_j+1} \tilde{d}$$

$$\text{else } V \leftarrow V \cup \{\tilde{d}\}$$

$$\text{end if}$$

$$\text{end for;}$$

where $|\cdot|$ is the $L_1$ norm. The set of cluster centres $\{w_1, w_2, \ldots, w_M\}$ then forms the visual vocabulary $V$.

8- Represent each image in the plurality of images (or training dataset) by a *histogram* over the visual vocabulary. That is:

$$\text{for } i = 1 \text{ to } N \text{ do}$$

$$\text{for } j = 1 \text{ to } n_{Ri} \text{ do}$$

$$w_j^i \leftarrow argmin_{w_{j'} \in V} |w_{j'} - \tilde{d}_j^i|$$

$$\text{end for}$$

$$h_i \leftarrow histogram_V(\{w_1^i, w_2^i, \ldots, w_{n_{Ri}}^i\})$$

$$\text{end for;}$$

where $histogram_V(\cdot)$ produces a histogram of normalised frequencies with one bin for each visual word in $V$. Note that using normalised frequencies accommodates for the plurality of images with varying number of descriptors. The model for classifying an object then consists of a method for computing a descriptor, the dimension reducing mapping function $f_{dim}$, the vocabulary $V=\{w_1, w_2, \ldots, w_M\}$, and the images' histograms $H=\{h_1, h_2, \ldots, h_N\}$.

A second aspect of the invention is a method for computing a set of descriptors for an image of an object, the method comprising:

    a. Providing the image of the object;

b. Dividing the image into a plurality of sub-images;
c. Computing for each sub-image a value characterizing a feature of the sub-image in a plurality of colour spaces;
d. Collecting each value of each sub-image to constitute the set of descriptors that corresponds to the image.

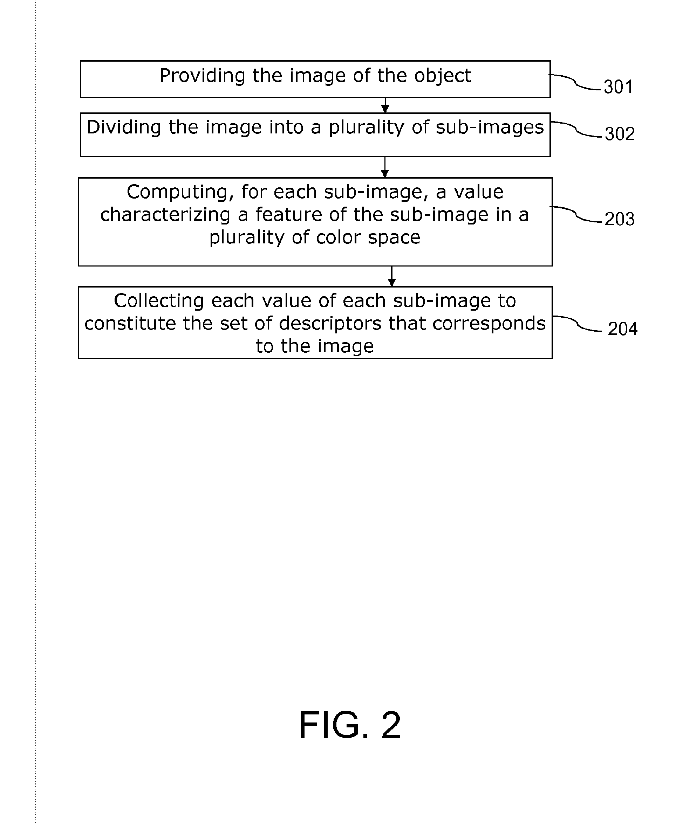

Figure 2 shows a flowchart illustrating an exemplary implementation of the present invention for computing a set of descriptors for an image of an object. Step 201 consists in providing the image of the object. Step 202 consists in dividing the image into a plurality of sub-images. At step 203, for each sub-image a value characterizing a feature of the sub-image in a plurality of colour spaces is computed as a descriptor. In step 204, each value of each sub-image is collected to constitute or form the set of descriptors that corresponds to the image.

According to the invention, a plurality of values can be computed to characterize a plurality of features of the sub-image in a plurality of colour spaces so as to provide a plurality of sets of descriptors and the method further comprises providing a complete set of descriptors for the image, the complete set of descriptors consisting of the plurality of sets of descriptors.

According to the invention, computing for each sub-image a value characterizing a feature of the sub-image in a plurality of colour spaces comprises one or more of the following:

a. Computing for each sub-image a gradient for a plurality of scales and a plurality of directions;
b. Computing for each sub-image a gradient for a plurality of scales and a plurality of directions, the gradient being a combination of a maximum gradient magnitude and a corresponding direction;
c. Convolving the sub-image with each of the directional derivatives $I_x$ and $I_y$ of a Gaussian kernel; and computing, from the directional derivatives $I_x$ and $I_y$, and for a plurality of directions, using separability, a derivative $I_\theta$ for a predetermined direction $\theta$ by forming an inner product with a unit vector representing the predetermined direction $\theta$;
d. Determining for each sub-image a colour distribution.

According to the invention, the set of descriptors can be computed using one of the following: Daisy descriptors, SIFT descriptors , SURF descriptors, GLOH descriptors, LESH descriptors, scale-space descriptors, pyramids descriptors, shape constext, steerable filters, PCA-SIFT, differential invariants, spin image, complex filters, moment invariants and any combination thereof.

According to the invention, the value to be computed when a set of descriptors is computed can be any of the following: a numerical value, a real value, an integer, a complex value, a vector, and a real valued vector.

According to the invention, determining for each sub-image a colour distribution comprises one of the following:

a. Computing an average of each dimension of the colour space within the sub-image, and normalizing the plurality of averages computed over dimensions of the colour space;
b. Determining for each sub-image a frequency over each dimension of the colour space, and normalizing the determined frequencies.

According to the invention, the feature of the sub-image can be any of the following: texture, colour, shape, motion, and location.

According to the invention, the colour spaces can be any of the following: RGB space, BWspace, HSV space, HSL space, XYZ space, LUV space, and CIELUV space.

In an embodiment, a set of descriptors representing two features of the image could be computed in the following way:

a. Providing the image of the object;
b. Dividing the image into a plurality of sub-images;
c. Computing for each sub-image a first value characterizing a first feature of the sub-image in a first plurality of colour spaces;
d. Computing for each sub-image a second value characterizing a second feature of the sub-image in a second plurality of colour spaces;
e. Concatenate for each sub-image the first value and the second value of the sub-image to constitute the descriptor of the sub-image;
f. Collect all descriptors of each sub-image into the set of descriptors of the image.

In an embodiment, computing a number of real valued vectors, so-called descriptors, which characterise an image of wood well involves selecting two features to be characterized, e.g. texture and colour. The implementation of such an embodiment could be the following:

1. Divide the digital image raster into a number, $n_R$, of disjoint regions $R_i$ such that their union is the entire image raster $R$. That is $R = \bigcup_{1,2,\dots,n_R} R_i$ and

$R_i \cap R_j = \emptyset$ for $i \neq j$. A common choice would be to divide $R$ into a regular grid of squares of equal size. These regions allow us to deal with the image as split into a number of sub-images.

2. For the texture feature, the following is performed: denote by $I(\cdot)$ the colour (RGB) image as a function defined on a 2-dimensional discrete domain $R$ corresponding to pixels of the digital image raster. That is $I:R \rightarrow \{0,1,\dots,255\}^3$. Let $B(\cdot)$ be its grey scale (BW) equivalent, i.e. $BW :R \rightarrow \{0,1,\dots,255\}$. A common choice is to combine the RGB bands of the colour image by a linear map to produce the grey level equivalent, more precisely $BW(r) = (0.2989\ 0.5870\ 0.1140)I(r)$. Let $G(\cdot)$ be the 2-dimensional isotropic Gaussian

$$G((x,y);\sigma^2) = \frac{1}{\sqrt{2\pi\sigma^2}} \exp\left(-\frac{x^2}{2\sigma^2}\right) \times \frac{1}{\sqrt{2\pi\sigma^2}} \exp\left(-\frac{y^2}{2\sigma^2}\right) = g_x(x;\sigma^2) \times g_y(y;\sigma^2)$$

and define

$$BW_x(\cdot;\sigma^2) = BW \otimes \frac{\partial}{\partial x} g_x(\cdot;\sigma^2) \otimes g_y(\cdot;\sigma^2); \quad BW_y(\cdot;\sigma^2) = BW \otimes g_x(\cdot;\sigma^2) \otimes \frac{\partial}{\partial y} g_y(\cdot;\sigma^2)$$

where $\oplus$ is convolution in the discrete domain. Thanks to the separability, these computations can be arranged very efficient. Then the scale-directional response is

$$S(\cdot;\sigma^2,\theta) = \sqrt{\cos^2(\theta)BW_x^2(\cdot;\sigma^2) + \sin^2(\theta)BW_y^2(\cdot;\sigma^2)}$$

where the squares on the images $BW_x$ and $BW_y$ and the square root are element-wise. The scale-directional response is computed for a number of scales $n_\sigma$ (i.e. $\sigma \in \{\sigma_1,\dots,\sigma_{n_\sigma}\}$) and directions $n_\theta$ (i.e. $\theta \in \{\theta_1,\dots,\theta_{n_\theta}\}$). The scale-directional texture response for each region is formed as

$$t(\theta,\sigma,R_i) = \sum_{r \in R_i} S(r;\sigma^2,\theta).$$

In plain words, the scale-directional texture response are summed over each region and the texture responses for each region are collected in a real-valued vector as follows: $t_{R_i} = \{t(\theta,\sigma,R_i)\}_{\sigma \in \{\sigma_1,\dots,\sigma_{n_\sigma}\},\theta \in \{\theta_1,\dots,\theta_{n_\theta}\}}$ .

3. For the colour feature, the following is performed: let $I'(\cdot)$ denote the colour image in LUV colour space

$$I'(r) = \frac{1}{\sqrt{6}} \begin{bmatrix} \sqrt{2} & \sqrt{2} & \sqrt{2} \\ 2 & -1 & -1 \\ 0 & \sqrt{3} & -\sqrt{3} \end{bmatrix} I(r),$$

that is $I':R \rightarrow [0;442] \times [-209;209] \times [-181;181]$. The 3 dimensions in each of the RGB and LUV colour representations are called colour bands.

The colour information may now be aggregated within the image regions $R_i$ in different ways. One possibility is simple averaging, that is

$$c_{R_i}^1 = \frac{1}{|R_i|} \sum_{r \in R_i} I(r); \quad c_{R_i}^2 = \frac{1}{|R_i|} \sum_{r \in R_i} I'(r)$$

where $c_{R_i}^1, c_{R_i}^2 \in \mathbb{R}^3$. Observe that computing the average implicitly is band-wise. Another option is histogram binning' which is the following:

$$c_{R_i}^3 = \text{histogram}_C(\{I(r)\}_{r \in R_i}); \quad c_{R_i}^4 = \text{histogram}_C(\{I'(r)\}_{r \in R_i})$$

where $\text{histogram}_c : \mathbb{R}^3 \to \mathbb{N}^{n_b}$ *is the conglomerate of band-wise histograms with numbers of bins* $n_{b1}$, $n_{b2}$ and $n_{b3}$ respectively. *Thus* $n_b = n_{b1} + n_{b2} + n_{b3}$ is the total number of bins.

4. The scale-directional texture response and colour information is then combined in the full-dimensionality descriptor as here:

$$d_{R_i} = \begin{pmatrix} \dfrac{\alpha}{|t_{R_i}|} t_{R_i} \\ \dfrac{\beta}{|c_{R_i}|} c_{R_i} \end{pmatrix}$$

where $\alpha, \beta > 0$ and $\alpha + \beta = 1$ and $C_{Ri}$ is one of $c_{R_i}^1$, $c_{R_i}^2$, $c_{R_i}^3$, or. $c_{R_i}^4$. Observe that $|d_{Ri}|=1$ The dimensionality

$m$ of $d$ then is $n_\theta \times n_\sigma + 3$ when using $c_{R_i}^1$ or $c_{R_i}^2$ and $n_\theta \times n_\sigma$ when using $c_{R_i}^3$ or $c_{R_i}^4$.

A third aspect of the invention provides a method for classifying a candidate object, the method comprising:

a. Providing a candidate image of the candidate object;
b. Providing a model for classifying an object, the model comprising a method for computing a descriptor, a vocabulary, a dimension-reducing function, a plurality of sets of normalized frequencies labeled to classify a plurality of like objects;
c. Dividing the candidate image into a plurality of candidate sub-images;
d. Applying the method for computing a descriptor to each candidate sub-image to compute a descriptor representing the candidate sub-image;
e. Applying the dimension-reducing function on a space of descriptors containing the totality of the descriptors, to reduce a dimension of the space of descriptors to a reduced dimension;
f. Assigning each descriptor in the dimension-reduced space of descriptors to a nearest word in the vocabulary of the model;
g. Determining in the candidate image a frequency of each word of the vocabulary;
h. Normalizing the determined frequencies to obtain a set of normalized frequencies for the candidate image;
i. Computing a residual error between the set of normalized frequencies of the candidate image and each set of normalized frequencies in the plurality of sets of normalized frequencies of the model;

j. Determining the set of normalized frequencies of the model that is the nearest to the set of normalized frequencies of the candidate image based on a minimum residual error;

k. Classifying the candidate object as the object labeling the set of normalized frequencies determined.

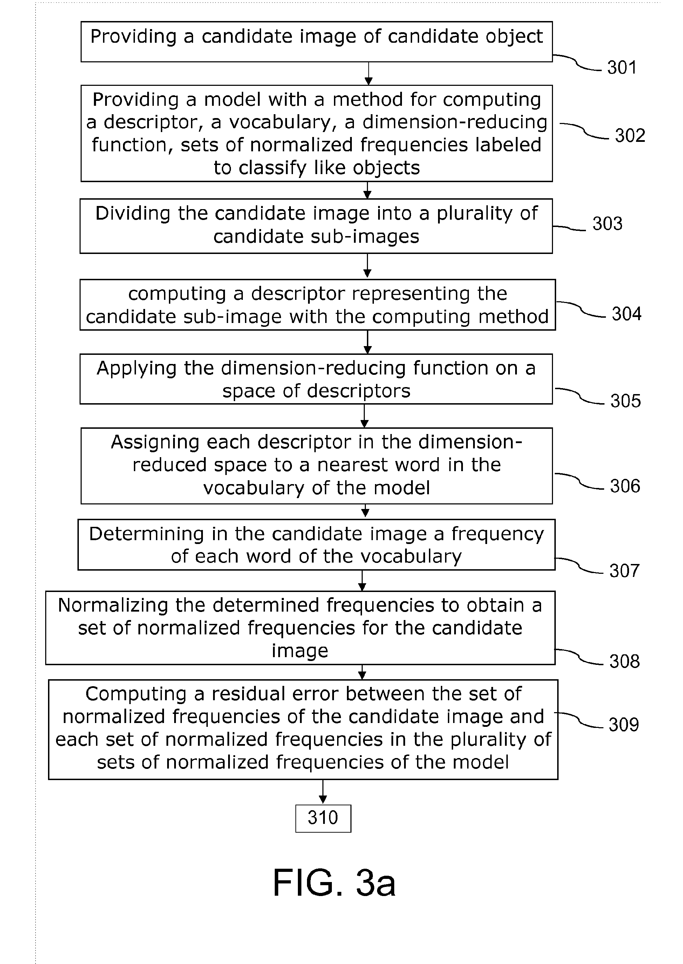

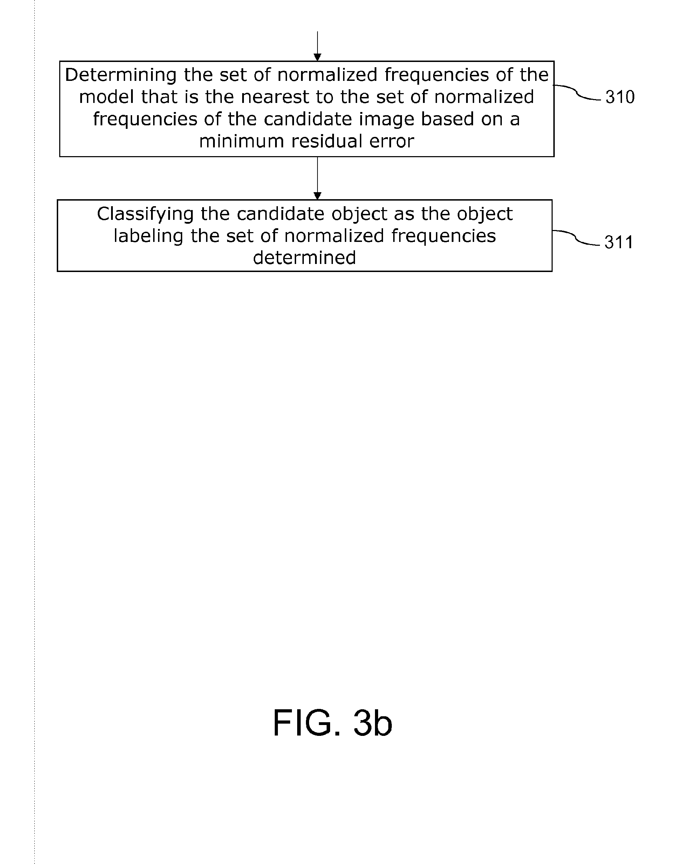

Figure 3 shows a flowchart illustrating an exemplary implementation of the present invention for classifying a candidate object. Step 301 provides a candidate image of the candidate object. Step 302 provides a model for classifying an object, the model comprising a method for computing a descriptor, a vocabulary, a dimension-reducing function, a plurality of sets of normalized frequencies labeled to classify a plurality of like objects. Step 303 consists in dividing each candidate image into a plurality of candidate sub-images. Step 304 consists in applying the method for computing a descriptor to each candidate sub-image to compute a descriptor representing the candidate sub-image. Then, step 305 consists in applying the dimension-reducing function on a space of descriptors containing the totality of the descriptors, to reduce a dimension of the space of descriptors to a dimension. Step 306 consists in assigning each descriptor in the dimension-reduced space of descriptor to a nearest word in the vocabulary of the model. Step 307 consists in determining in the candidate image a frequency of each word of the vocabulary. Step 308 consists in normalizing the determined frequencies to obtain a set of normalized frequencies for the candidate image. Step 309 consists in computing a residual error between the set of normalized frequencies of the candidate image and each set of normalized frequencies in the plurality of sets of normalized frequencies of the model. Step 310 consists in determining the set of normalized frequencies of the model that is the nearest to the set of normalized frequencies of the candidate image based on a minimum residual error. Step 311 consists in classifying the candidate object as the object labeling the set of normalized frequencies determined.

In an embodiment, the classification of an object includes the following steps:

1. Computing the dimension reduced descriptors for the sub-images of a candidate image and deriving the candidate image histogram over $V$.

2. Searching the training image histograms $H$ for the historgram closest to that of the candidate image. The candidate image is then classified according to the wood characteristics of the closest training image of the model.

In another embodiment, the classification task is to predict the wood characteristic of interest, here species or rot, given a candidate image of some wood. This is done by retrieving the training image that is the closest to the candidate image and then label the candidate image with the characteristic of the retrieved image. The retrieval includes the following steps:

1. Represent the candidate image by a histogram over the visual vocabulary $V$, $h_c$ say, as described above.

2. Retrieve the index of the closest training image as $i \leftarrow argmin_{,\in \{1, 2, ..., N\}}| h_i'\text{-}h_c|$ That is, closeness is measured in terms of distance between visual word histograms. Again, using the normalised frequencies allows for candidate images of varying size.

Simple exhaustive search suffices for a limited training dataset while for larger training datasets more involved algorithms may be needed for run time performance.

3. Label the candidate image with the species/rot of the corresponding trainning image.

According to the invention, the method for classifying an object further comprises:

a. Determining whether each residual error computed is above a predetermined threshold;

b. If it is determined that the residual error is not above the predetermined threshold, then proceeding to step j of the method for classifying an object as defined above; else

c. Disregarding classifying the candidate object.

For example, if the candidate object is a fruit and the model for classifying an object has been trained for images of wood bark, the method for classifying the object would then disregard the candidate object as the residual errors obtained for the fruit would be above a predetermined threshold.

According to the invention, the object can be any of the following: a tree, a plurality of trees, wood, a log, a branch, a leaf, a rot, a disease, a knot, a fruit, a plant, a cell, a living organism, an organ or any combination thereof.

In the tenth aspect of the invention, a system for providing a model for classifying an object is provided. The system comprises:

a. Means for providing a plurality of images of like objects;

b. Means for assigning a label to each image so as to classify each object;

c. Means for dividing each image into a plurality of sub-images;

d. Means for computing, for each sub-image, a descriptor representing a feature of the sub-image;
e. Means for reducing a dimension of a space of descriptors to obtain a space of descriptors of reduced dimension;

Wherein a plurality of descriptors of the dimension-reduced space of descriptors forms a plurality of clusters; and

f. Means for selecting a cluster centre for each cluster;
g. Means for generating a vocabulary containing a plurality of words representing the totality of selected cluster centres;
h. Means for assigning each descriptor in the dimension-reduced space of descriptors to a nearest word in the vocabulary;
i. Means for determining for each image a frequency of each word in the vocabulary;
j. Means for normalizing the frequencies determined for each image to obtain a set of normalized frequencies for each image of the plurality of images
k. Means for assigning for each image the label of the image to the set of normalized frequencies of the image.

In another aspect of the invention, there is provided a system for computing a set of descriptors for an image of an object, the method comprising:

a. Means for providing the image of the object;
b. Means for dividing the image into a plurality of sub-images;
c. Means for computing for each sub-image a value characterizing a feature of the sub-image in a plurality of colour spaces;
d. Means for collecting each value of each sub-image to constitute the descriptors that corresponds to the image.

In another aspect of the invention, there is provided a system for classifying a candidate object, the method comprising:

a. Means for providing a candidate image of the candidate object;
b. Means for providing a model for classifying an object, the model comprising a method for computing a descriptor, a vocabulary, a dimension-reducing function, a plurality of sets of normalized frequencies labeled to classify a plurality of like objects;
c. Means for dividing each candidate image into a plurality of candidate sub-images;
d. Means for applying the method for computing a descriptor to each candidate sub-image to compute a descriptor representing the candidate sub-image;
e. Means for applying the function on a space of descriptors containing the totality of the descriptors, to reduce a dimension of the space of descriptors to a reduced dimension;
f. Means for assigning each descriptor in the dimension-reduced space of descriptors to a nearest word in the vocabulary of the model;
g. Means for determining in the candidate image a frequency of each word in the vocabulary;
h. Means for normalizing the determined frequencies to obtain a set of normalized frequencies for the candidate image;
i. Means for computing a residual error between the set of normalized frequencies of the candidate image and each set of normalized frequencies in the plurality of sets of normalized frequencies of the model;
j. Means for determining the set of normalized frequencies of the model that is the nearest to the set of normalized frequencies of the candidate image based on a minimum residual error;
k. Means for classifying the candidate object as the object labeling the set of normalized frequencies determined.

Experimental results have been carried out and the results are presented in what follows.
Case tree species classification: The method has been applied to two set of images of bark. One set was taken in the forest for the purpose of this invention only and the other set was taken from the BarkTex database. The images were 480x720 pixels and subdivided into 15x15 pixels sub-images. With a reduction to dimensionality 15 of the descriptor, using binning for colour space RGB, vocabularies in the range of 200-2000 words was reached giving classification rates in the range 90-95%.
Case rot classification: From images of log end faces, parts of fresh and partly rotten wood were masked out. With sub-images of 10x10 pixels, binned LUV colour space and a reduction to descriptor dimensionality 25, a vocabulary of about 1750 words was reached and a classification rate of 85%.
The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for providing a model for classifying an object, the method comprising:

   a. Providing a plurality of images of like objects;
   b. Assigning a classification label to each image so as to classify each object;
   c. Dividing each image into a plurality of sub-images;
   d. Computing, for each sub-image, a descriptor representing the sub-image;
   e. Reducing a dimension of a space of descriptors to obtain a space of descriptors of a reduced dimension;

   Wherein a plurality of descriptors of the dimension-reduced space of descriptors forms a plurality of clusters; and

   f. Selecting a cluster centre for each cluster;
   g. Generating a vocabulary containing a plurality of words representing the totality of selected cluster centres;
   h. Assigning each descriptor in the dimension-reduced space of descriptors to a nearest word in the vocabulary;
   i. Determining for each image a frequency of each word in the vocabulary;
   j. Normalizing the frequencies determined for each image to obtain a set of normalized frequencies for the plurality of images;
   k. Assigning for each image the label of the image to the set of normalized frequencies of the image.

2. The method according to claim 1 wherein the step of reducing a dimension of the space of descriptors containing the totality of descriptors to obtain a space of descriptors of a reduced dimension comprises one or more of the following:

   a. a dimension reducing map parameterised with an empirical mean and a projection matrix;
   b. a principal component analysis.

3. The method according to claim 1 wherein the step of selecting a cluster centre for each cluster is performed by a method selected from the group consisting of a leader-follower algorithm, a k-means algorithm, a quality threshold clustering method and any combination thereof.

4. A method for computing a set of descriptors for an image of an object, the method comprising:

   a. Providing the image of the object;
   b. Dividing the image into a plurality of sub-images;
   c. Computing for each sub-image a value characterizing a feature of the sub-image in a plurality of colour spaces;
   d. Collecting each value of each sub-image to constitute the set of descriptors that corresponds to the image.

5. A method according to claim 4 wherein a plurality of values are computed to characterize a plurality of features of the sub-image in a plurality of colour spaces so as to provide a plurality of sets of descriptors and wherein the method further comprises providing a complete set of descriptors for the image, the complete set of descriptors consisting of the plurality of sets of descriptors.

6. The method according to any of claims 4 and 5 wherein the step of computing for each sub-image a value characterizing a feature of the sub-image in a plurality of colour spaces comprises one or more of the following:

   a. Computing for each sub-image a gradient for a plurality of scales and a plurality of directions;
   b. Computing for each sub-image a gradient for a plurality of scales and a plurality of directions, the gradient being a combination of a maximum gradient magnitude and a corresponding direction;
   c. Convolving the sub-image with each of the directional derivatives $I_x$ and $I_y$ of a Gaussian kernel; and computing, from the directional derivatives $I_x$ and $I_y$, and for a plurality of directions, using separability, a derivative $I_\theta$ for a predetermined direction $\theta$ by forming an inner product with a unit vector representing the predetermined direction $\theta$;
   d. Determining for each sub-image a colour distribution.

7. The method according to any of the preceding claims wherein the set of descriptors is computed using a method selected from the group consisting of Daisy descriptors, SIFT descriptors , SURF descriptors, GLOH descriptors, LESH descriptors, scale-space descriptors, pyramids descriptors, shape constext, steerable filters, PCA-SIFT, differential invariants, spin image, complex filters, moment invariants and any combination thereof.

8. The method according to any one of claims 4 to 6 wherein the value is selected from the group consisting of a numerical value, a real value, an integer value, a complex value, a vector, and a real valued vector.

9. The method according to claim 6 wherein determining for each sub-image a colour distribution comprises one of the following:

   a. Computing an average of each dimension of the colour space within the sub-image, and normalizing the plurality of averages computed over dimensions of the colour space;
   b. Determining for each sub-image a frequency over each dimension of the colour space, and normalizing the determined frequencies.

10. The method according to any one of claims 4 to 9 wherein the feature of the sub-image is selected from the group consisting of texture, colour, shape, motion, and location.

11. The method according to any one of claims 4 to 9 wherein the colour spaces are selected from the group consisting of RGB space, BW space, HSV space, HSL space, XYZ space, LUV space, and CIELUV space.

12. A method for classifying a candidate object, the method comprising:

   a. Providing a candidate image of the candidate object;
   b. Providing a model for classifying an object, the model comprising a method for computing a descriptor, a vocabulary, a dimension-reducing function, a plurality of sets of normalized frequencies labeled to classify a plurality of like objects;
   c. Dividing the candidate image into a plurality of candidate sub-images;
   d. Applying the method for computing a descriptor to each candidate sub-image to compute a descriptor representing the candidate sub-image;
   e. Applying the dimension-reducing function on a space of descriptors containing the totality of the descriptors, to reduce a dimension of the space of descriptors to a reduced dimension;
   f. Assigning each descriptor in the dimension-reduced space of descriptors to a nearest word in the vocabulary of the model;
   g. Determining in the candidate image a frequency of each word of the vocabulary;
   h. Normalizing the determined frequencies to obtain a set of normalized frequencies for the candidate image;
   i. Computing a residual error between the set of normalized frequencies of the candidate image and each set of normalized frequencies in the plurality of sets of normalized frequencies of the model;
   j. Determining the set of normalized frequencies of the model that is the nearest to the set of normalized frequencies of the candidate image based on a minimum residual error;
   k. Classifying the candidate object as the object labeling the set of normalized frequencies determined.

13. The method according to claim 12 wherein the method further comprises:

   a. Determining whether each residual error computed is above a predetermined threshold;

b. If it is determined that the residual error is not above the predetermined threshold, then proceeding to step j; else

c. Disregarding classifying the candidate object.

14. The method according to any of the preceding claims wherein the object is selected from the group consisting of a tree, a plurality of trees, wood, a log, a branch, a leaf, a rot, a disease, a knot, a fruit, a plant, a cell, a living organism, an organ or any combination thereof.

15. A system for providing a model for classifying an object, the system comprising:

a. Means for providing a plurality of images of like objects;
b. Means for assigning a label to each image so as to classify each object;
c. Means for dividing each image into a plurality of sub-images;
d. Means for computing, for each sub-image, a descriptor representing a feature of the sub-image;
e. Means for reducing a dimension of a space of descriptors to obtain a space of descriptors of a reduced dimension;

Wherein a plurality of descriptors of the dimension-reduced space of descriptors forms a plurality of clusters; and

f. Means for selecting a cluster centre for each cluster;
g. Means for generating a vocabulary containing a plurality of words representing the totality of selected cluster centres;
h. Means for assigning each descriptor in the dimension-reduced space of descriptors to a nearest word in the vocabulary;
i. Means for determining for each image a frequency of each word in the vocabulary;
j. Means for normalizing the frequencies determined for each image to obtain a set of normalized frequencies for each image of the plurality of images
k. Means for assigning for each image the label of the image to the set of normalized frequencies of the image.

16. A system for computing a set of descriptors for an image of an object, the method comprising:

a. Means for providing the image of the object;
b. Means for dividing the image into a plurality of sub-images;
c. Means for computing for each sub-image a value characterizing a feature of the sub-image in a plurality of colour spaces;
d. Means for collecting each value of each sub-image to constitute the set of descriptors that corresponds to the image.

17. A system for classifying a candidate object, the method comprising:

a. Means for providing a candidate image of the candidate object; d. Means for providing a model for classifying an object, the model comprising a method for computing a descriptor, a vocabulary, a dimension-reducing function, a plurality of sets of normalized frequencies labeled to classify a plurality of like objects;
b. Means for dividing each candidate image into a plurality of candidate sub-images;
c. Means for applying the method for computing a descriptor to each candidate sub-image to compute a descriptor representing the candidate sub-image;
d. Means for applying the function on a space of descriptors containing the totality of the descriptors, to reduce a dimension of the space of descriptors to a reduced dimension;
e. Means for assigning each descriptor in the dimension-reduced space of descriptors to a nearest word in the vocabulary of the model;
f. Means for determining a frequency of each word in the vocabulary;
g. Means for normalizing the determined frequencies to obtain a set of normalized frequencies for the candidate image;
h. Means for computing a residual error between the set of normalized frequencies of the candidate image and each set of normalized frequencies in the plurality of sets of normalized frequencies of the model;
i. Means for determining the set of normalized frequencies of the model that is the nearest to the set of normalized frequencies of the candidate image based on a minimum residual error;
j. Means for classifying the candidate object as the object labeling the set of normalized frequencies determined.

**18.** A computer program product embodied in a computer-readable medium for causing an apparatus to perform a method in accordance with claim 1.

**19.** A computer program product embodied in a computer-readable medium for causing an apparatus to perform a method in accordance with claim 4.

**20.** A computer program product embodied in a computer-readable medium for causing an apparatus to perform a method in accordance with claim 12.

FIG. 1

| Providing a plurality of images of like objects | 101 |

| Assigning a classification label to each image so as to classify each object | 102 |

| Dividing each image into a plurality of sub-images | 103 |

| Computing, for each sub-image, a descriptor representing the sub-image | 104 |

| Reducing a dimension of a space of descriptors to obtain a space of descriptors of a reduced dimension | 105 |

| Selecting a cluster centre for each cluster | 106 |

| Generating a vocabulary containing a plurality of words representing the totality of selected cluster centres | 107 |

| Assigning each descriptor in the dimension-reduced space of descriptors to a nearest word in the vocabulary | 108 |

| Determining for each image a frequency of each word in the vocabulary | 109 |

| Normalizing the frequencies determined for each image to obtain a set of normalized frequencies for the plurality of images | 110 |

| Assigning for each image the label of the image to the set of normalized frequencies of the image | 111 |

Providing the image of the object ⌐ 301

Dividing the image into a plurality of sub-images ⌐ 302

Computing, for each sub-image, a value characterizing a feature of the sub-image in a plurality of color space ⌐ 203

Collecting each value of each sub-image to constitute the set of descriptors that corresponds to the image ⌐ 204

# FIG. 2

Providing a candidate image of candidate object
— 301

Providing a model with a method for computing a descriptor, a vocabulary, a dimension-reducing function, sets of normalized frequencies labeled to classify like objects
— 302

Dividing the candidate image into a plurality of candidate sub-images
— 303

computing a descriptor representing the candidate sub-image with the computing method
— 304

Applying the dimension-reducing function on a space of descriptors
— 305

Assigning each descriptor in the dimension-reduced space to a nearest word in the vocabulary of the model
— 306

Determining in the candidate image a frequency of each word of the vocabulary
— 307

Normalizing the determined frequencies to obtain a set of normalized frequencies for the candidate image
— 308

Computing a residual error between the set of normalized frequencies of the candidate image and each set of normalized frequencies in the plurality of sets of normalized frequencies of the model
— 309

310

# FIG. 3a

Determining the set of normalized frequencies of the model that is the nearest to the set of normalized frequencies of the candidate image based on a minimum residual error — 310

Classifying the candidate object as the object labeling the set of normalized frequencies determined — 311

# FIG. 3b

Europäisches
Patentamt

European
Patent Office

Office européen
des brevets

# EUROPEAN SEARCH REPORT

Application Number

EP 10 16 1514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAHL A B ET AL: "Effective image database search via dimensionality reduction" COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23 June 2008 (2008-06-23), pages 1-6, XP031285513 ISBN: 978-1-4244-2339-2 | 1-3,12, 13,15, 17,18,20 | INV. G06K9/46 |
| Y | * chapter 2; figure 1 * * chapter 3.1 * * chapter 3.3; figure 2; tables 1-2 * ----- | 14 | |
| T | Sclaroff et al.: "10.3.2 Visual Statistics" In: M S Lew (Ed.): "Principles of Visual Information Retrieval" 2001, Springer Verlag , London; GB , XP002603049 ISBN: 1-85233-381-2 , pages 264-268 * under "Color"; page 265 * ----- | 4-11,16, 19 | |
| Y | ZHANG J ET AL: "Local Features and Kernels for Classification of Texture and Object Categories: A Comprehensive Study" INTERNATIONAL JOURNAL OF COMPUTER VISION, KLUWER ACADEMIC PUBLISHERS, BO, vol. 73, no. 2, 25 September 2006 (2006-09-25), pages 213-238, XP019468639 ISSN: 1573-1405 * chapter 4.1.1; page 219 * * page 220; figure 2 * ----- | 14 | TECHNICAL FIELDS SEARCHED (IPC) G06K |

The present search report has been drawn up for all claims

| Place of search | Date of completion of the search | Examiner |
|---|---|---|
| The Hague | 1 October 2010 | Kollreider, Klaus |